# EUROPEAN PATENT APPLICATION

(11) **EP 4 578 783 A1**
(43) Date of publication of application: **02.07.2025**
(21) Application number: 22956015.6
(22) Date of filing: 24.08.2022
(51) Int. Cl.: B64C 27/00, B64D 47/08, G05D 1/20

(54) **FLIGHT CONTROL METHOD, APPARATUS, UNMANNED AERIAL VEHICLE, AND STORAGE MEDIUM**

(71) Applicant: SZ DJI Technology Co., Ltd., Shenzhen, Guangdong 518057 (CN)
(72) Inventor: LI, Xiang, Shenzhen, Guangdong 518057 (CN); SUI, Qi, Shenzhen, Guangdong 518057 (CN); JIANG, Li, Shenzhen, Guangdong 518057 (CN); SHANG, Zhimeng, Shenzhen, Guangdong 518057 (CN)
(74) Representative: Appelt, Christian W.
(86) International application number: PCT/CN2022/114501
(87) International publication number: WO 2024/040466

(57) **Abstract**

A flight control method, device, UAV and storage medium. The method includes: in a flight state, determining whether a UAV has collided (31); when it is determined that a collision has occurred, reducing rotation speeds of all motors in the power system of the UAV to reduce the flight altitude of the UAV, and adjusting the attitude of the UAV to a normal attitude (32). The present application can reduce the occurrence of abnormal situations in which a UAV flips over after colliding with an obstacle and finally firmly attached to the obstacle.

## Description

### Technical Field

The present application relates to the field of unmanned aerial vehicle (UAV) technology, and in particular to a flight control method, an apparatus, a UAV and a storage medium.

### Background Art

With the rapid development of science and technology, UAVs have seen widespread development and application due to their good stability and strong anti-interference capabilities.

Currently, although the UAV flight control technology is becoming increasingly mature, abnormal situations can still occur during UAV flights. One possible abnormal situation is that after a UAV collides with an obstacle (such as a wall), it may flip over and eventually become firmly attached to the obstacle. Another possible abnormal situation is that due to wind disturbances or control errors, there may be a drift in the pitch attitude difference between a UAV's body and its camera system, making it unable to maintain a constant attitude.

Therefore, reducing the occurrence of abnormal situations during UAV flights has become an urgent issue that needs to be addressed.

### Summary of the Invention

Embodiments of the present application provide a flight control method and device, a UAV and a storage medium to address the issue of reducing the occurrence of abnormal situations during UAV flights in the existing technology.

In a first aspect, embodiments of the present application provide a flight control method, applied to an unmanned aerial vehicle (UAV), where the UAV includes a power system, and the power system includes multiple motors that provide flight lift, including:
In a flight state, determining whether the UAV has collided; and
When a collision is determined, reducing speeds of all motors in the UAV's power system to lower the UAV's flight altitude, and adjusting the UAV's attitude to a normal attitude.

In a second aspect, embodiments of the present application provide a flight control method, applied to a UAV, the UAV includes a photographing device, a gimbal for mounting and adjusting a pitch attitude of the photographing device, and a body, the gimbal is mounted on the body, the method includes:
Obtaining a reference pitch attitude deviation between the photographing device and the body, where the reference pitch attitude deviation is set by a user;
Obtaining an actual pitch attitude deviation between the photographing device and the body;
Determining an error between the reference pitch attitude deviation and the actual pitch attitude deviation; and
Adjusting a pitch attitude of the body based on the error to make the pitch attitude deviation between the photographing device and the body approaches the reference pitch attitude deviation.

In a third aspect, embodiments of the present application provide a flight control device, applied to a UAV, where the UAV includes a power system, and the power system includes multiple motors to providing flight lift, the device includes: a memory and a processor;
The memory is configured to store program code;
The processor is configured to call the program code, and when the program code is executed, perform the following operations:
   In a flight state, determining whether the UAV has collided;
   When a collision is determined, reducing speeds of all motors in the UAV's power system to lower the UAV's flight altitude, and adjusting the UAV's attitude to a normal attitude.

In a fourth aspect, embodiments of the present application provide a flight control device, applied to a UAV, the UAV includes a photographing device, a gimbal for mounting and adjusting a pitch attitude of the photographing device, and a body, the gimbal is mounted on the body, the device includes: a memory and a processor;
The memory is configured to store program code;
The processor is configured to call the program code, and when the program code is executed, perform the following operations:
   Obtaining a reference pitch attitude deviation between the photographing device and the body, where the reference pitch attitude deviation is set by a user;
   Obtaining an actual pitch attitude deviation between the photographing device and the body;
   Determining an error between the reference pitch attitude deviation and the actual pitch attitude deviation; and
   Adjusting a pitch attitude of the body based on the error to make the pitch attitude deviation between the photographing device and the body approaches the reference pitch attitude deviation.

In a fifth aspect, embodiments of the present application provide a UAV, including a memory, a processor, and a computer program stored in the memory that can be run on the processor, when the processor executes the computer program, it implements the steps of any method set forth in the first aspect, or any method set forth in the second aspect.

In a sixth aspect, embodiments of the present application provide a computer-readable storage medium, which stores a computer program, when the computer program is executed by a processor, it implements the steps of any method set forth in the first aspect or the second aspect.

In a seventh aspect, embodiments of the present application provide a UAV, which includes a power system and a flight control device as set forth in either the third aspect or the fourth aspect.

Embodiments of the present application also provide a computer program, which, when executed by a computer, is used to implement the method set forth in any of the first aspect or second aspect.

Embodiments of the present application provide a flight control method and device, a UAV, and a storage medium. During flight, it determines whether the UAV has collided. If a collision is detected, the rotational speeds of all motors in the UAV's power system are reduced to lower its flight altitude. The UAV's attitude is then adjusted to a normal attitude. This approach ensures that, upon detecting a collision, the UAV's flight altitude is reduced first, followed by the adjustment of its attitude to a normal state. This reduces the risk of tipping over, which might occur if the UAV's attitude is immediately adjusted upon collision. Consequently, it helps minimize the occurrence of abnormal situations where the UAV flips over after hitting an obstacle and becomes firmly stuck to it.

### Brief Description of the Drawings

To provide a clearer explanation of the technical solutions in the embodiments of this application or the existing technology, a brief introduction to the drawings used in the descriptions of the embodiments or the existing technology is provided below. It is evident that the drawings described below pertain to some embodiments of this application. For a person skilled in the art, additional drawings can be derived from these without requiring creative efforts.
FIG. 1 is a schematic diagram of an application scenario for the flight control method described in this application.
FIG. 2A and 2B are schematic diagrams showing a UAV flipping over and adhering to a wall after colliding with it.
FIG. 3 is a schematic diagram of a process flow for the flight control method provided in some embodiments of this application.
FIG. 4 is a schematic diagram of a process flow for the flight control method provided in some embodiments of this application.
FIG. 5A is a schematic diagram of a reference pitch attitude deviation provided in some embodiments of this application.
FIG. 5B is a schematic diagram of a control device sending control instructions provided in some embodiments of this application.
FIG. 5C is a schematic diagram of an actual pitch attitude deviation provided in some embodiments of this application.
FIG. 5D is a schematic diagram of an adjustment made based on an error provided in some embodiments of this application.
FIG. 6 is a schematic diagram of a structure of the flight control device provided in some embodiments of this application.
FIG. 7 is a schematic diagram of a structure of the flight control device provided in some embodiments of this application.

### Description of the Embodiments

To make the objectives, technical solutions, and advantages of the embodiments of this application clearer, the technical solutions in the embodiments will be described clearly and comprehensively below in conjunction with the accompanying drawings. It is evident that the described embodiments represent a portion of the embodiments of this application, not all of them. Based on these embodiments of this application, all other embodiments obtained by a person skilled in the art without creative efforts also fall within the scope of protection of this application.

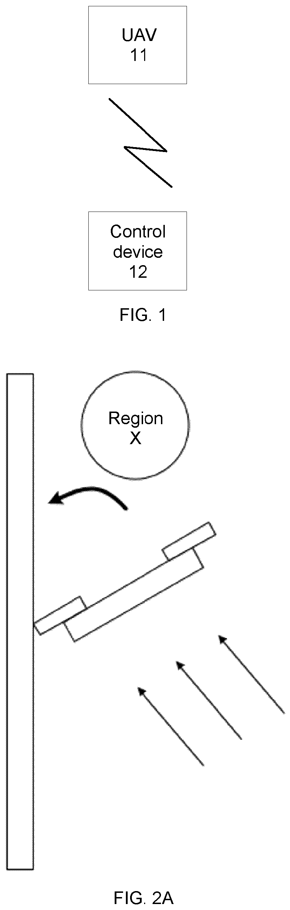

The flight control method provided in the embodiments of this application can be applied to the flight control system shown in FIG. 1. As illustrated in FIG. 1, the flight control system may include a UAV 11 and a control device 12, which can communicate wirelessly. The UAV includes a power system composed of multiple motors that provide flight lift. In certain embodiments, the UAV may include multiple propellers, each driven by a motor. The UAV also includes a photographing device, a gimbal for mounting and adjusting the pitch attitude of the photographing device, and a body. The gimbal is mounted on the body, and the power system, as mentioned earlier, can also be installed on the body. It is worth noting that this application does not impose limitations on the quantity, type, or form of the UAV 11 or control device 12.

Exemplarily, the control device 12 can be a terminal device, which may include at least one of a remote controller, smartphone, tablet, laptop, or smart wearable device. The terminal device can have an application (APP) installed for controlling the UAV 11.

Exemplarily, the control device 12 can be a remote controller. The remote controller can also communicate with a terminal device via wired or wireless connections. Optionally, the remote controller may be equipped with a fixed bracket for securing the terminal device.

Exemplarily, the control device can be augmented reality (AR) equipment, virtual reality (VR) equipment, or similar devices.

The following will provide a detailed description of some embodiments of this application in conjunction with the accompanying drawings. In the absence of any conflict, the embodiments and features described below can be combined with each other.

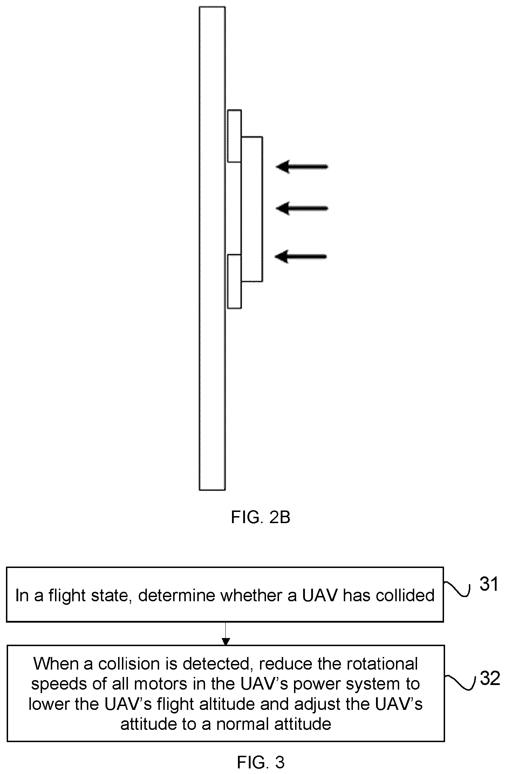

One abnormal situation that a UAV might encounter during flight is when it flips over and becomes firmly stuck to an obstacle (such as a wall) after collision. Through analysis, the root cause of this abnormal situation is found to be that, under the impact of the collision with the obstacle, the UAV's attitude tilts toward the direction of the obstacle. Typically, to adjust the UAV's attitude to a normal state after a collision, the motor closest to the obstacle is accelerated. As shown in FIG. 2A, the acceleration of the motor near the obstacle rapidly draws air from the region X. This causes the air pressure in region X to decrease. The faster the motor near the obstacle spins, the lower the air pressure in region X becomes. As a result, a low-pressure area is formed on an inner side the obstacle, meaning the air pressure in region X becomes lower than the air pressure beneath the UAV. The pressure difference between the area above and below the UAV causes the UAV to be "pressed" toward the obstacle (as indicated by the arrow in FIG. 2A). This means that the acceleration of the motor closest to the obstacle not only fails to generate a torque to balance the attitude but instead exacerbates the UAV's attachment to the inner side of the obstacle, forming a positive feedback loop. This ultimately causes the UAV to become firmly stuck to the obstacle, as shown in FIG. 2B.

To reduce the occurrence of abnormal situations where the UAV flips over and becomes firmly stuck to an obstacle after a collision, the embodiments of this application provide a flight control method, as shown in FIG. 3.

FIG. 3 is a schematic diagram of the process flow for the flight control method provided in some embodiments of this application. The method described herein can be applied to the UAV 11 in FIG. 1, which includes a power system with multiple motors that provide flight lift. As shown in FIG. 3, the method herein may include the following steps:
Step 31: In a flight state, determine whether a UAV has collided.

In this step, since the abnormal situation of the UAV flipping over and becoming firmly stuck to an obstacle occurs due to attitude control after the UAV collides with the obstacle, it is possible to reduce the occurrence of this situation by controlling the UAV's behavior after the collision. Therefore, the method needs to determine whether a collision has occurred during the flight state. For example, the collision detection can be based on acceleration values and/or the magnitude of disturbances to determine whether the UAV has collided.

If it is determined that the UAV has not collided, the process can be ended. If a collision is detected, Step 32 can be further executed.

Step 32: When a collision is detected, reduce the rotational speeds of all motors in the UAV's power system to lower the UAV's flight altitude and adjust the UAV's attitude to a normal attitude.

In this step, when a collision is confirmed, the UAV exits the attitude control mode and stops controlling the power system to adjust the UAV's attitude to the normal attitude (i.e., the attitude for hovering). Instead, the speed of all motors in the UAV's power system is reduced. After lowering the UAV's flight altitude, the UAV's attitude is then adjusted to the normal attitude. This process helps to reduce the risk of the UAV becoming firmly stuck to the obstacle by first reducing its altitude and then stabilizing its attitude.

By reducing the rotational speed of all motors in the UAV's power system, the UAV's flight altitude can be lowered. Additionally, since the speed of the motor closest to the obstacle is also reduced, this helps to decrease the pressure difference between the region X and the area below the UAV. Normally, accelerating the motors near the obstacle would increase the pressure difference and cause a force that "presses" the UAV toward the obstacle. By lowering the motor speed, this force is reduced, minimizing the risk of the UAV being pulled toward the obstacle and becoming firmly stuck to it.

Furthermore, by lowering the UAV's flight altitude, the pressure difference between region X and the area below the UAV can be reduced, which in turn reduces the force that would normally "press" the UAV toward the obstacle when adjusting its attitude to the normal attitude. After lowering the UAV's altitude, adjusting its attitude to the normal attitude can therefore reduce the likelihood of a large pressure difference between region X and the area below the UAV, which could otherwise cause the UAV to be firmly stuck to the obstacle. This helps to minimize the occurrence of the abnormal situation where the UAV flips over after colliding with an obstacle and becomes firmly stuck to it.

The flight control method provided in some embodiments reduces the likelihood of the UAV flipping over and becoming firmly stuck to an obstacle after collision by first lowering the UAV's flight altitude and then adjusting its attitude to the normal attitude. This is achieved by detecting a collision during flight and reducing the rotational speed of all motors in the UAV's power system, which lowers the UAV's altitude and stabilizes its attitude. This sequence of actions prevents immediate attitude adjustments that could otherwise cause the UAV to tip over, thus minimizing the occurrence of abnormal situations like the UAV being firmly stuck to an obstacle after a collision.

Building on the embodiments shown in FIG. 3, it is noted that the propeller guard surrounding the propellers may form a duct, and this duct could obstruct the air interaction between the upper and lower parts of the UAV. In some embodiments, the method described in FIG. 3 can be applied to UAVs that include motors driving propellers, with propeller guards surrounding the propellers, forming a duct. In this case, the power system can still include motors driving the propellers, and the UAV may include the propeller guards surrounding the propellers. The propeller guard can be part of the UAV's body, meaning the body itself may include the guard, or the guard can be a separate component mounted on the body.

Based on the embodiments shown in FIG. 3, the UAV may be equipped with a sensor(s) to determine whether a collision has occurred based on the measurements from the sensor(s). In some embodiments, the sensor(s) may include an accelerometer, which can determine whether the UAV has collided by analyzing the accelerometer's measurement values. Specifically, determining whether the UAV has collided may include: checking whether the accelerometer's measurement exceeds a first threshold; if the measurement exceeds the first threshold, indicating that a collision has occurred; if the measurement does not exceed the first threshold, indicating that no collision has occurred. For example, the first threshold can be set at 5 g, where g represents gravitational acceleration. This ensures that if the accelerometer's measurement exceeds a certain threshold, it can be inferred that the acceleration is caused by a collision with an obstacle. In some embodiments, the sensor(s) may include an attitude sensor, which can determine whether the UAV has collided by analyzing the attitude sensor's measurement values. Specifically, determining whether the UAV has collided may include: checking whether the attitude sensor's measurement exceeds an attitude threshold; if the measurement exceeds the attitude threshold, indicating that a collision has occurred; if the measurement does not exceed the attitude threshold, indicating that no collision has occurred. For example, the attitude threshold can be set at 40, 45, 50, 60, or 70 degrees. This ensures that if the attitude sensor's measurement exceeds a certain threshold, it can be inferred that the acceleration is caused by a collision with an obstacle.

In some embodiments, a disturbance observer can be designed to monitor UAV attitude disturbances to determine whether a collision has occurred. Specifically, determining whether the UAV has collided may include: using an observer to monitor the UAV's attitude disturbances; checking whether the attitude disturbance exceeds a second threshold; if the disturbance exceeds the second threshold, indicating that a collision has occurred; if the disturbance does not exceed the second threshold, indicating that no collision has occurred. This ensures that once the attitude disturbance surpasses a certain threshold, it can be inferred that the disturbance is caused by a collision with an obstacle.

In some embodiments, external disturbances can be calculated using a model to determine whether a UAV collision has occurred. Specifically, determining whether the UAV has collided may include: using an inverse model of the UAV's control system model and the measured angular velocity (velocities) of the motor(s) to calculate the total input of the control system model; subtracting the calculated control amount from a total input to obtain an external disturbance; checking whether the external disturbance exceeds a third threshold; if the disturbance exceeds the third threshold, indicating that a collision has occurred; if the disturbance does not exceed the third threshold, indicating that no collision has occurred. This ensures that once the external disturbance exceeds a certain threshold, it can be inferred that the disturbance is caused by a collision with an obstacle.

Based on some embodiments shown in FIG. 3, the reduction in the rotational speed of all motors can be generally consistent. Herein, "generally consistent" can mean either the reduction in rotational speed is identical for all motors or the difference in reduction remains less than or equal to a specified threshold. By ensuring the reduction in motor speed is generally consistent, the UAV's attitude can remain essentially unchanged during the process of reducing its altitude.

Based on some embodiments shown in FIG. 3, during the UAV's altitude reduction process, the tilt angle caused by the collision may remain essentially unchanged. In other words, as the UAV lowers its altitude, the tilt angle continues to reflect the tilt caused by the collision. This can be achieved by controlling the speed adjustment inputs to maintain a stable tilt angle, which is beneficial for improving flight stability.

In practical applications, the control amounts of the power system can be divided into ascent speed control amounts and attitude control amounts. The ascent speed control amount manages the UAV's vertical motion, thus controlling its ascent and descent. The attitude control amount governs the UAV's rotation about its axes (e.g., pitch, roll, and yaw), thereby controlling its attitude. Based on this, and in line with the embodiments shown in FIG. 3, one implementation for reducing the rotational speeds of all motors in the UAV's power system may include reducing both the ascent speed control amount and the attitude control amount supplied to the power system.

When a proportional-integral-derivative (PID) control algorithm is used to compute the control amounts, clearing the integral term can be employed to reduce the speed control amount. Building on this, and as part of the embodiments shown in FIG. 3, one implementation for reducing the ascent speed control amount and the attitude control amount may involve: clearing an integral term used to calculate the ascent speed control amount to lower the input supplied to the power system; clearing an integral term used to calculate the attitude control amount to reduce the input supplied to the power system. This approach ensures that once the UAV collides with an obstacle, the flight controller immediately clears the integral terms for vertical and attitude controls. This prevents the control amounts from escalating due to positive feedback. Following the clearing of the integral terms, the UAV's propellers operate at a low throttle range, maintaining minimal attitude control. This allows the UAV to stabilize and, once it exits the collision area (Region X), quickly restore normal control functionality.

If the UAV experiences a minor collision, such as when the attitude is slightly out of control (e.g., less than 45 degrees), the collision detection mechanism may activate upon confirming the UAV has collided. Under the influence of the algorithm that clears the integral terms for vertical and attitude control, the UAV maintains a certain level of attitude control even at a low throttle range, allowing it to recover its attitude and return to normal stability. In the case of a severe collision, where the UAV's attitude flips significantly, such as a 90-degree side flip against an obstacle, the algorithm remains effective. The UAV may descend under the influence of gravity. If the obstacle is not entirely vertical, such as a tree trunk, once the UAV gains some distance from the obstacle, it can immediately regain normal attitude and vertical control.

Based on some embodiments shown in FIG. 3, optionally, during flight control adjustments following a collision, the system can also distinguish whether the collision was caused by the user's manual control operation. This differentiation ensures appropriate control responses tailored to the collision's cause.

Based on this, in some embodiments, the method illustrated in FIG. 3 may further include determining whether the collision is caused by the user's manual control operation. Specifically, reducing the rotational speed of all motors in the UAV's power system may include: if the collision is not caused by manual control, reducing the rotational speed of all motors in the UAV's power system. For example, this determination can be made by checking whether a user control command was received at the time of the collision. If a user control command is received when the collision occurs, it can be concluded that the collision is caused by manual control. If no user control command is received when the collision occurs, it can be concluded that the collision is not caused by manual control. This approach ensures that the reduction in motor speed only occurs if the collision is not caused by the user's manual control operation. This prevents scenarios where a user intentionally directs the UAV to collide with an obstacle (e.g., for a task) but instead causes the UAV to lower its altitude unnecessarily. This method enhances the user experience by avoiding unintended flight behaviors. For instance, if a user manually controls the UAV to hover near a wall but a collision occurs due to interference or imprecise positioning, the system can reduce the motor speeds to lower the UAV's altitude safely.

In some embodiments, the method illustrated in FIG. 3 may further include determining whether the collision is caused by the user's manual control operation. Specifically: if the collision is caused by manual control, accelerate all motors based on the user's manual control amount. This ensures that when a collision is determined to be caused by the user's intentional control, the UAV can correctly execute the user's desired action, such as striking an obstacle as intended. This approach aligns the UAV's flight control with the user's intent, thereby improving the overall user experience. For example, if a branch obstructs the UAV's flight, the user may manually command the UAV to accelerate. In this case, the system would accelerate all motors based on the user's control amount, allowing the UAV to forcefully push through the branch and continue its flight.

Another abnormal situation that may occur during UAV flight is that, due to wind disturbances or control errors, the pitch attitude difference between the UAV's body and the photographing device may drift and cannot be maintained constant. The main scenario where this issue occurs is as follows: in one UAV control mode, the user can adjust the pitch attitude of the photographing device (for example, the user adjusts the pitch attitude of the UAV's photographing device via a terminal device as described earlier) to set the pitch attitude deviation between the photographing device and the body as a reference pitch attitude deviation. The user operates the joystick on the terminal device to send flight control commands to the UAV, which flies based on the received flight control commands. During flight, the pitch attitude of the UAV's body may change. Ideally, the pitch attitude difference between the photographing device and the body should always remain at the reference pitch attitude deviation. This way, the user can sense and understand the UAV's body pitch attitude based on the image captured by the photographing device displayed on the terminal device, and then decide how to manipulate the joystick to control the UAV's flight. However, due to wind disturbances or control errors, the pitch attitude difference between the UAV's body and the photographing device may drift and fail to remain constant, meaning it cannot be maintained at the reference pitch attitude deviation. This makes it difficult for the user to perceive and understand the UAV's body pitch attitude based on the image displayed by the photographing device, which in turn affects the user's control of the UAV's flight.

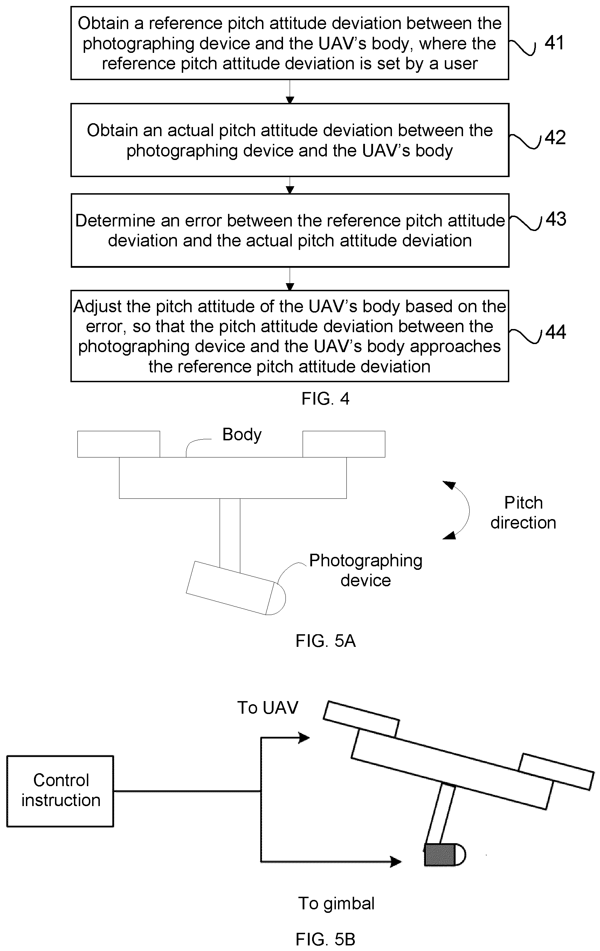

To address the occurrence of this anomaly, some embodiments of this application provide a flight control method as shown in FIG. 4.

FIG. 4 is a flowchart of the flight control method provided by some embodiments of this application. The method provided herein can be applied to the UAV 11 shown in FIG. 1, where the UAV includes a photographing device, a gimbal for mounting and adjusting the pitch attitude of the photographing device, and the UAV's body. The gimbal is mounted on the UAV's body. As shown in FIG. 4, the method may include:
Step 41: Obtain the reference pitch attitude deviation between the photographing device and the UAV's body, where the reference pitch attitude deviation is set by the user.

In this step, the reference pitch attitude deviation between the photographing device and the UAV's body refers to the attitude deviation between the photographing device and the body in the pitch direction of the UAV's body, as set by the user. The reference pitch attitude deviation between the photographing device and the body, for example, can be as shown in FIG. 5A. The reference pitch attitude deviation between the photographing device and the body can be set by the user by adjusting the attitude of the gimbal. Specifically, adjusting (or setting) the attitude of the gimbal can alter the attitude deviation between the photographing device and the body in the pitch direction of the UAV's body.

Exemplarily, the reference pitch attitude deviation between the photographing device and the body can be determined based on the user-set gimbal attitude. Of course, in some embodiments, the reference pitch attitude deviation between the photographing device and the body can also be determined in other ways, and the application does not limit this approach.

Step 42: Obtain the actual pitch attitude deviation between the photographing device and the UAV's body.

As shown in FIG. 5B, during the UAV control process, the control device sends control commands to adjust the pitch attitude of the UAV's body and gimbal, so that both the body and the gimbal can move according to the pitch attitude controlled by the control device. Ideally, the pitch attitude change between the photographing device and the UAV's body in the pitch direction should be identical, allowing the image to reflect the UAV's pitch attitude change. However, since the speed at which the body and the gimbal adjust their pitch attitudes may be different, after a period of control, errors may arise between the actual pitch attitude deviation and the reference pitch attitude deviation between the photographing device and the body. Therefore, in this step, the actual pitch attitude deviation between the photographing device and the body may be obtained.

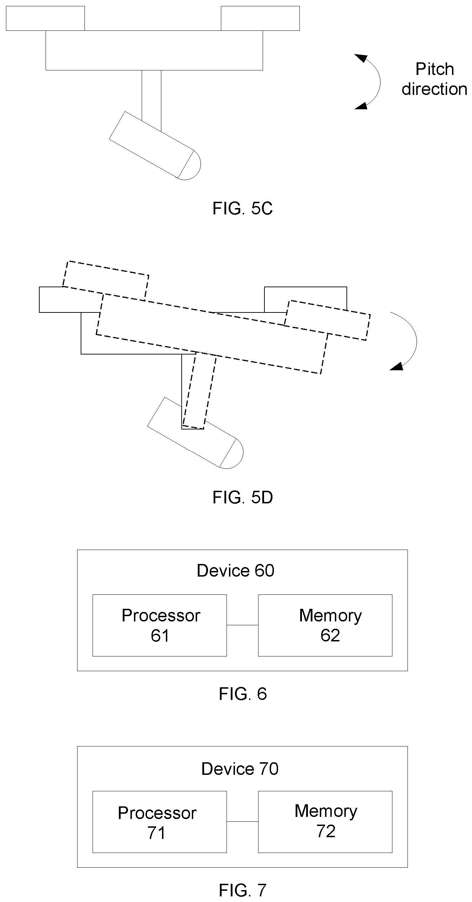

The actual pitch attitude deviation refers to the actual pitch attitude difference between the photographing device and the body in the pitch direction of the UAV's body. The actual pitch attitude deviation between the photographing device and the body, for example, can be as shown in FIG. 5C.

For example, the actual pitch attitude deviation between the photographing device and the UAV's body may be determined based on the current attitude of the gimbal. Of course, in some embodiments, the actual pitch attitude deviation between the photographing device and the body may also be determined in other ways, and this application does not limit the approach.

Step 43: Determine the error between the reference pitch attitude deviation and the actual pitch attitude deviation.

In this step, after obtaining the reference pitch attitude deviation and the actual pitch attitude deviation, the error between the reference pitch attitude deviation and the actual pitch attitude deviation can be determined. For example, the difference between the reference pitch attitude deviation and the actual pitch attitude deviation can be calculated and defined as the error between the two.

Step 44: Adjust the pitch attitude of the UAV's body based on the error, so that the pitch attitude deviation between the photographing device and the UAV's body approaches (moves closer to) the reference pitch attitude deviation.

In this step, to lock the pitch attitude between the photographing device and the UAV's body in the pitch axis direction of the body, the UAV may follow the photographing device (which can also be understood as following the gimbal). Therefore, after determining the error between the reference pitch attitude deviation and the actual pitch attitude deviation, the pitch attitude of the UAV's body can be adjusted based on the error, so that the pitch attitude deviation between the photographing device and the UAV's body moves closer to the reference pitch attitude deviation. This locks the pitch attitude between the photographing device and the UAV's body in the pitch axis direction of the body. Based on FIG. 5A and 5C, the method for adjusting the pitch attitude of the body according to the error can be as shown in FIG. 5D.

It should be noted that the direction indicated by the arrow in FIG. 5D represents the direction of adjusting the pitch attitude of the UAV's body. When the UAV's body rotates in the pitch axis direction as shown by the arrow in FIG. 5D, the pitch attitude deviation between the photographing device and the body can be reduced, bringing the pitch attitude deviation closer to the reference pitch attitude deviation. The solid line in FIG. 5D represents the UAV before adjustment, and the dashed line represents the UAV after adjustment.

After obtaining the error between the reference pitch attitude deviation and the actual pitch attitude deviation, theoretically, to ensure that the pitch attitude deviation between the photographing device and the UAV's body should always be the reference pitch attitude deviation, the gimbal can be controlled based on the error to adjust the pitch attitude of the photographing device. This would bring the pitch attitude deviation between the photographing device and the body closer to the reference pitch attitude deviation. However, this approach can cause the photographing device to shake or shift, leading to a shaking or offset display on the terminal device, which could confuse the user and degrade the interactive experience. Therefore, in some embodiments, the pitch attitude of the UAV's body may be adjusted based on the error, so that the pitch attitude deviation between the photographing device and the UAV's body moves closer to the reference pitch attitude deviation. This ensures that the display on the terminal device remains stable while still bringing the pitch attitude deviation between the photographing device and the body closer to the reference pitch attitude deviation. The flight control method provided herein involves obtaining the reference pitch attitude deviation between the photographing device and the UAV's body, obtaining the actual pitch attitude deviation between the photographing device and the UAV's body, determining the error between the reference pitch attitude deviation and the actual pitch attitude deviation, and adjusting the pitch attitude of the UAV's body based on the error. This allows the photographing device and the UAV's body to maintain a stable pitch attitude relationship along the UAV's body pitch axis, ensuring that the pitch attitude deviation between the photographing device and the body always matches the reference pitch attitude deviation.

Based on some embodiments shown in FIG. 4, the UAV's body attitude can be adjusted based on the error, specifically by adjusting the body attitude in real-time according to the error. This ensures the real-time nature of the adjustment.

In some embodiments, when the error exceeds a preset error threshold, the body pitch attitude is adjusted based on the error. This reduces the amount of adjustment work required.

In some embodiments shown in FIG. 4, when the UAV includes a power system, adjusting the body pitch attitude based on the error can specifically involve controlling the power system according to the error to adjust the body pitch attitude. The power system is mounted on the UAV's body, and in some embodiments, the body may include arms, with the power system mounted on the arms.

Optionally, when performing flight control based on the error, the UAV's control mode can be distinguished. Based on this, in some embodiments, the method of the embodiments shown in FIG. 4 may further include: determining the control mode of the UAV. The adjustment of the UAV's body pitch attitude based on the error can specifically include: when the UAV's control mode is a first control mode, adjusting the body pitch attitude based on the error. The first control mode can specifically be any type of control mode where the video reflects the UAV's attitude change in the pitch direction. For example, the first control mode may include First-Person View (FPV) mode or racing mode, where, when the UAV is in FPV or racing mode, it is necessary to keep the gimbal and the UAV in a relative stationary position. Thus, in modes that require the video to reflect the UAV's attitude change in the pitch direction, the body follows the photographing device, allowing the UAV's control mode to be flexibly implemented, which is beneficial for enhancing the user's experience.

In some embodiments, the method of the embodiment shown in FIG. 4 may further include: when the UAV's control mode is a second control mode, obtaining an initial pitch attitude of the photographing device, and controlling the gimbal to make the pitch attitude of the photographing device approach the initial pitch attitude. The second control mode can specifically be any type of control mode where the gimbal controls the pitch attitude of the photographing device to remain stable. For example, the second control mode may be a locking mode, where, when the UAV is in locking mode, the gimbal needs to maintain a fixed attitude relative to the ground. This allows the user to use a control mode where the gimbal stabilizes the photographing device's attitude as needed, which enhances the user's experience.

Optionally, the initial pitch attitude can be set by the user, allowing the user to flexibly adjust the field of view of the photographing device based on shooting needs, which is beneficial for improving the user experience.

FIG. 6 is a schematic diagram of the structure of a flight control device according to some embodiments of the present application, which is applied to a UAV. The UAV includes a power system, which includes multiple motors providing flight lift. As shown in FIG. 6, a device 60 may include: a processor 61 and a memory 62.

The memory 62 is used to store program code.

The processor 61 calls the program code, and when the program code is executed, the processor 61 performs the following operations:
In the flight state, determining whether the UAV has collided;
When a collision is detected, reducing the speeds of all motors in the UAV's power system to lower the UAV's flight altitude and adjust the UAV's attitude to a normal attitude.

The flight control device provided herein can be used to implement the technical solutions of the method embodiments shown in FIG. 3, and its underlying principle and technical effects are similar to those of the method embodiments, so they will not be repeated here.

FIG. 7 is a schematic diagram of the structure of a flight control device provided in some embodiments, which is applied to a UAV. The UAV includes a photographing device, a gimbal for mounting and adjusting the pitch attitude of the photographing device, and a body. The gimbal is mounted on the body. As shown in FIG. 7, a device 70 may include: a processor 71 and a memory 72.

The memory 72 is used to store program code.

The processor 71 calls the program code, and when the program code is executed, the processor 71 performs the following operations:
Obtaining a reference pitch attitude deviation between the photographing device and the body, where the reference pitch attitude deviation is set by the user;
Obtaining an actual pitch attitude deviation between the photographing device and the body;
Determining an error between the reference pitch attitude deviation and the actual pitch attitude deviation;
Adjusting a pitch attitude of the body according to the error, so that the pitch attitude deviation between the photographing device and the body approaches the reference pitch attitude deviation.

The flight control device provided herein can be used to implement the technical solutions of the methods embodiments shown in FIG. 4. Its implementation principle and technical effects are similar to those of the method embodiments, and will not be repeated here.

Moreover, some embodiments of the application also provide a UAV, which includes the flight control device shown in FIG. 6 or FIG. 7.

Some embodiments of the application also provide a computer-readable storage medium, which stores a computer program. When executed by a processor, the computer program implements the methods described in the embodiments shown in FIG. 3 or FIG. 4.

A person skilled in the art would understand that: all or part of the steps of the above method embodiments can be accomplished by program instructions and associated hardware. The aforementioned program can be stored in a computer-readable storage medium. When executed, the program performs the steps of the above method embodiments; the aforementioned storage medium includes ROM, RAM, magnetic disks, optical discs, and other media that can store program code.

Finally, it should be noted that the above embodiments are intended to illustrate the technical solutions of this application, and are not intended to limit them. Although the application has been described in detail with reference to the above embodiments, a person skilled in the art would understand that modifications can be made to the technical solutions described in the above embodiments, or some or all of the technical features can be equivalently substituted; such modifications or substitutions do not change the essential nature of the corresponding technical solutions, nor do they depart from the scope of the technical solutions of the embodiments of this application.

## Claims

1. A flight control method applied to an unmanned aerial vehicle (UAV), wherein the UAV includes a power system, the power system includes a plurality of motors to provide flight lift, **characterized in that** the method comprises:
in a flight state, determining whether the UAV has a collision; and
when it is determined that a collision occurs, reducing speeds of all motors in the power system of the UAV to reduce a flight altitude of the UAV, and adjusting an attitude of the UAV to a normal attitude.

2. The method according to claim 1, **characterized in that** speed reduction ranges of all the motors are substantially the same.

3. The method according to claim 1, **characterized in that** during a process of reducing the flight altitude of the UAV, a tilt angle of the UAV caused by the collision is kept substantially unchanged.

4. The method according to any one of claims 1 to 3, **characterized in that** the power system further includes propellers driven by the motors, and the UAV includes a propeller guard component surrounding outer sides of the propellers.

5. The method according to any one of claims 1 to 3, **characterized in that** the method further comprises:
determining whether the collision is caused by a manual control operation of a user; wherein
the reducing of the speeds of all motors in the power system of the UAV includes:
when the collision is not caused by the manual control operation of the user, reducing rotation speeds of all motors in the power system of the UAV.

6. The method according to any one of claims 1 to 3, **characterized in that** the method further comprises:
determining whether the collision is caused by a manual control operation of a user; and
when the collision is caused by the manual control operation of the user, controlling all motors to accelerate according to the manual control operation of the user.

7. The method according to any one of claims 1 to 6, **characterized in that** the determining whether the UAV has a collision includes: determining whether a measurement value of an accelerometer of the UAV exceeds a first threshold; when the measurement value exceeds the first threshold, determining that the UAV has a collision; and when the measurement value does not exceed the first threshold, determining that the UAV does not have a collision.

8. The method according to any one of claims 1 to 6, **characterized in that** the determining whether the UAV has a collision includes: measuring attitude disturbance of the UAV by an observer and determining whether an attitude disturbance value exceeds a second threshold; when the attitude disturbance value exceeds the second threshold value, determining that the UAV has a collision; and when the attitude disturbance value does not exceed the second threshold value, determining that the UAV does not have a collision.

9. The method according to any one of claims 1 to 6, **characterized in that** the determining whether the UAV has a collision includes:
calculating, based on an inverse model of a control system model of the UAV and measured angular velocities of the motors, a total input of the control system model;
subtracting a calculated control amount from the total input to obtain an external disturbance;
determining whether the external disturbance exceeds a third threshold;
when the external disturbance exceeds the third threshold, determining that the UAV has a collision; and
when the external disturbance does not exceed the third threshold, determining that the UAV does not have a collision.

10. The method according to any one of claims 1 to 9, **characterized in that** the reducing of the speeds of all motors in the power system of the UAV includes:
reducing an ascent speed control amount and an attitude control amount provided to the power system.

11. The method according to claim 10, **characterized in that** the reducing of the ascent speed control amount and the attitude control amount provided to the power system includes:
when a proportional-integral-derivative (PID) control algorithm is used to calculate the control amounts, clearing an integral term used to calculate the ascent speed control amount to reduce the ascent speed control amount provided to the power system; and clearing an integral term used to calculate the attitude control amount to reduce the attitude control amount provided to the power system.

12. A flight control method applied to an unmanned aerial vehicle (UAV), wherein the UAV includes a photographing device, a gimbal for mounting and adjusting a pitch attitude of the photographing device, and a body, wherein the gimbal is mounted on the body, **characterized in that** the method comprises:
obtaining a reference pitch attitude deviation between the photographing device and the body, wherein the reference pitch attitude deviation is set by a user;
obtaining an actual pitch attitude deviation between the photographing device and the body;
determining an error between the reference pitch attitude deviation and the actual pitch attitude deviation; and
adjusting a pitch attitude of the body based on the error so that a pitch attitude deviation between the photographing device and the body approaches the reference pitch attitude deviation.

13. The method according to claim 12, **characterized in that** the adjusting of the pitch attitude of the body based on the error includes: when the error is greater than a preset error threshold, adjusting the pitch attitude of the body based on the error.

14. The method according to claim 12, **characterized in that** the UAV includes a power system installed on the body; and
the adjusting of the pitch attitude of the body based on the error includes:
controlling the power system based on the error to adjust the pitch attitude of the body.

15. The method according to any one of claims 12 to 14, **characterized in that** the method further comprises:
determining a control mode of the UAV; and
the adjusting of the pitch attitude of the body based on the error includes:
when the control mode of the UAV is a first control mode, adjusting the pitch attitude of the body based on the error.

16. The method according to any one of claims 12 to 14, **characterized in that** the method further comprises:
when the control mode of the UAV is a second control mode, obtaining an initial pitch attitude of the photographing device; and controlling the gimbal to make the pitch attitude of the photographing device approach the initial pitch attitude.

17. The method according to claim 16, **characterized in that** the initial pitch attitude is set by a user.

18. A flight control device applied to an unmanned aerial vehicle (UAV), wherein the UAV includes a power system, the power system includes a plurality of motors to provide flight lift, **characterized in that** the device comprises: a memory and a processor, wherein
the memory is configured to store program code;
the processor is configured to call the program code and perform the following operations when the program code is executed:
in a flight state, determining whether the UAV has a collision, and
when it is determined that a collision occurs, reducing speeds of all motors in the power system of the UAV to reduce a flight altitude of the UAV, and adjusting an attitude of the UAV to a normal attitude.

19. The device according to claim 18, **characterized in that** speed reduction ranges of all the motors are substantially the same.

20. The device according to claim 18, **characterized in that** during a process of reducing the flight altitude of the UAV, a tilt angle of the UAV caused by the collision is kept substantially unchanged.

21. The device according to any one of claims 18 to 20, **characterized in that** the power system further includes propellers driven by the motors, and the UAV includes a propeller guard component surrounding outer sides of the propellers.

22. The device according to any one of claims 18 to 20, **characterized in that** the processor is further configured to:
determine whether the collision is caused by a manual control operation of a user; and
when reducing of the speeds of all motors in the power system of the UAV, the processor is specifically configured to:
when the collision is not caused by the manual control operation of the user, reduce rotation speeds of all motors in the power system of the UAV.

23. The device according to any one of claims 18 to 20, **characterized in that** the processor is further configured to:
determine whether the collision is caused by a manual control operation of a user; and
when the collision is caused by the manual control operation of the user, control all motors to accelerate according to the manual control operation of the user.

24. The device according to any one of claims 18 to 23, **characterized in that** the processor is configured to: when determining whether the UAV has a collision includes, determine whether a measurement value of an accelerometer of the UAV exceeds a first threshold; when the measurement value exceeds the first threshold, determine that the UAV has a collision; and when the measurement value does not exceed the first threshold, determine that the UAV does not have a collision.

25. The device according to any one of claims 18 to 23, **characterized in that** the processor is configured to: when determining whether the UAV has a collision, measure attitude disturbance of the UAV by an observer and determine whether an attitude disturbance value exceeds a second threshold; when the attitude disturbance value exceeds the second threshold value, determine that the UAV has a collision; and when the attitude disturbance value does not exceed the second threshold value, determine that the UAV does not have a collision.

26. The device according to any one of claims 18 to 23, **characterized in that** the processor is configured to: when determining whether the UAV has a collision,
calculate, based on an inverse model of a control system model of the UAV and measured angular velocities of the motors, a total input of the control system model;
subtract a calculated control amount from the total input to obtain an external disturbance;
determine whether the external disturbance exceeds a third threshold;
when the external disturbance exceeds the third threshold, determine that the UAV has a collision; and
when the external disturbance does not exceed the third threshold, determine that the UAV does not have a collision.

27. The device according to any one of claims 18 to 26, **characterized in that** the processor is configured to: when reducing the speeds of all motors in the power system of the UAV, reduce an ascent speed control amount and an attitude control amount provided to the power system.

28. The device according to claim 27, **characterized in that** that the processor is configured to: for reducing the ascent speed control amount and the attitude control amount provided to the power system,
when a proportional-integral-derivative (PID) control algorithm is used to calculate the control amounts, clear an integral term used to calculate the ascent speed control amount to reduce the ascent speed control amount provided to the power system; and clear an integral term used to calculate the attitude control amount to reduce the attitude control amount provided to the power system.

29. A flight control device applied to an unmanned aerial vehicle (UAV), wherein the UAV includes a photographing device, a gimbal for mounting and adjusting a pitch attitude of the photographing device, and a body, wherein the gimbal is mounted on the body, **characterized in that** the device comprises: a memory and a processor, wherein
the memory is configured to store program code;
the processor is configured to call the program code and perform the following operations when the program code is executed:
obtain a reference pitch attitude deviation between the photographing device and the body, wherein the reference pitch attitude deviation is set by a user;
obtain an actual pitch attitude deviation between the photographing device and the body;
determine an error between the reference pitch attitude deviation and the actual pitch attitude deviation; and
adjust a pitch attitude of the body based on the error so that a pitch attitude deviation between the photographing device and the body approaches the reference pitch attitude deviation.

30. The device according to claim 29, **characterized in that** the processor is configured to: for adjusting the pitch attitude of the body based on the error includes: when the error is greater than a preset error threshold, adjust the pitch attitude of the body based on the error.

31. The device according to claim 29, **characterized in that** the UAV includes a power system installed on the body; and the processor is configured to: when adjusting the pitch attitude of the body based on the error, control the power system based on the error to adjust the pitch attitude of the body.

32. The device according to any one of claims 29 to 31, **characterized in that** the processor is further configured to:
determine a control mode of the UAV; and
for adjusting of the pitch attitude of the body based on the error, when the control mode of the UAV is a first control mode, adjust the pitch attitude of the body based on the error.

33. The device according to any one of claims 29 to 31, **characterized in that** the processor is further configured to:
when control mode of the UAV is a second control mode, obtain an initial pitch attitude of the photographing device; and control the gimbal to make the pitch attitude of the photographing device approach the initial pitch attitude.

34. The device according to claim 33, **characterized in that** the initial pitch attitude is set by a user.

35. An unmanned aerial vehicle (UAV), **characterized in that** the UAV comprises a memory and a processor, and the memory stores a computer program that can be run on the processor, wherein when executing the computer program, the processor implements the steps in the method set forth in any one of claims 1 to 11, or the steps in the method set forth in any one of claims 12 to 17.

36. A computer-readable storage medium, **characterized in that** the computer-readable storage medium stores a computer program, and when the computer program is executed by a processor, the steps in the method set forth in any one of claims 1 to 17 are implemented.

37. An unmanned aerial vehicle (UAV), **characterized in that** the UAV comprises a power system and a flight control device as set forth in any one of claims 18 to 34.
